# DEMANDE DE BREVET EUROPEEN

(11) **EP 0 771 604 A1**
(43) Date de publication de la demande: **07.05.1997**
(21) Numéro de dépôt: 96810720.1
(22) Date de dépôt: 28.10.1996
(51) Int. Cl.: B23K 20/00

(54) **Dispositif de soudage**

(30) Priorité: 27.10.1995 CH 3054/95
(71) Demandeur: Neracher, Arnold, CH-1247 Anières (CH)
(72) Inventeur: Neracher, Arnold, CH-1247 Anières (CH)
(74) Mandataire: Charbonnier, Georges R.

(57) **Abrégé**

Le dispositif de soudage par diffusion d'un alliage métallique entre les pièces à souder comprend un corps de chauffe (1) logé dans une enveloppe (2) servant de réservoir d'énergie thermique et un puit de conduction (3) constitué par un diamant naturel de type 2A.

Ce dispositif permet d'obtenir des soudures sans polluant.

Il convient particulièrement bien au soudage de composants électronique sur des circuits imprimés ou hybrides.

## Description

Le soudage de deux pièces par diffusion d'un alliage métallique servant de liant est souvent utilisé pour souder des composants électroniques sur les circuits imprimés ou les circuits hybrides.

La soudure obtenue doit être exempte de polluants tels qu oxydes, émail fondu, polymere fondu.

Par ailleurs il faut limiter au maximum la zone de diffusion de manière que les zones environnantes ne s'échauffent pas. Ceci implique que l'énergie thermique soit amenée très rapidement au niveau de la soudure.

L'objet de la présente invention est un dispositif de soudage par diffusion d'un alliage métallique qui permet d'obtenir des soudures pratiquement exempte de matière polluante et sans échauffement des zones voisines de la zone de diffusion.

Ce dispositif est caractérisé par le fait qu'il comprend un puit de conduction, avantageusement constitué par un diamant naturel du type 2A.

Le diamant naturel du type 2A est, à température ordinaire, l'archétype non conforme de la loi Dulong-Petit et Wiedmann-Franz. Il est chimiquement neutre, sa chaleur spécifique est faible, il est bon isolant électrique et possède la meilleures conductibilité thermique de tous les corps connus, notamment l'argent et le cuivre.

Sa liaison interatomique très élevée lui confère un réseau très rigide avec une fréquence de vibration très élevée donc une caractéristique de température de Debye très élevée.

Le transport de chaleur dans un solide covalent comme le diamant est effectué par les phonons.

La conductibilté du diamant naturel type 2A est de 15000 W/m.k à 80° K, celle du cuivre seulement de 400 W/m.k.

Une particularité du dispositif selon l'invention est de créer une forte concentration d'énergie thermique sur une très petite surface par une taille appropriée, par exemple en forme de tronc de cône. Dans ce cas le rapport des surfaces aux extrémités du diamant est inversément proportionnel aux rapports de conduction thermique entre le diamant et le matériau utilisé pour le réservoir thermique.

Le dispositif de soudage selon l'invention fonctionne en combinant deux actions physiques : la pression et la conduction thermique. La pression de soudage permet un meilleur échange de chaleur entre le diamant et la pièce à souder.

La conduction thermique élevée permet un apport rapide de l'énergie thermique au niveau de la zone de soudure sans surchauffer la région avoisinante. La concentration d'énergie thermique est fonction de la forme géométrique du diamant et de sa constitution.

Le dessin ci-annexé représente, schématiquement et à titre d'exemple, deux formes d'exécution .

La figure 1 est une vue en coupe de la première forme d'exécution.

La figure 2 montre différentes formes de diamants .

La figure 3 est une semblable à la figure 1 de la seconde forme d'exécution.

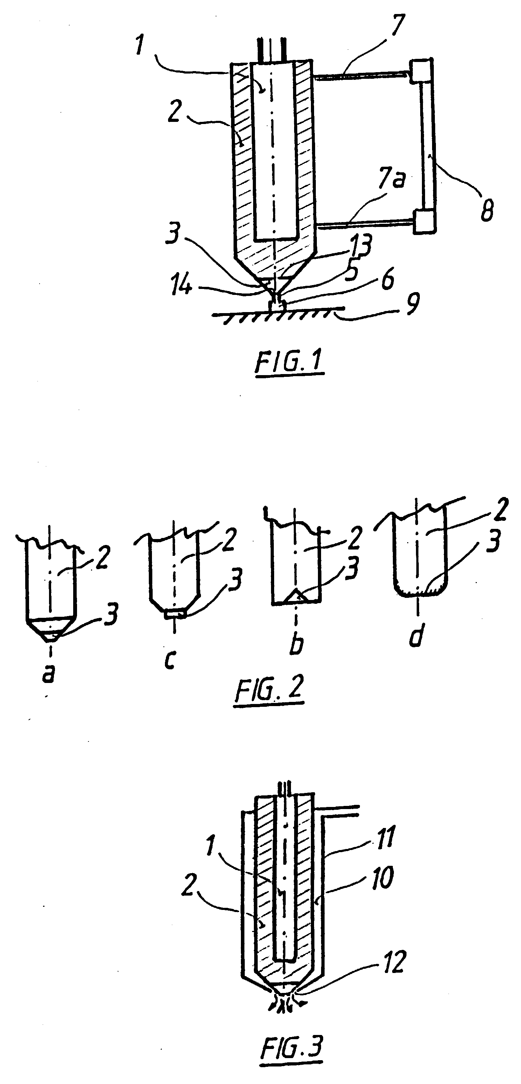

Le dispositif représenté à la figure 1 comprend un corps de chauffe 1 logé dans une enveloppe métallique 2 ayant une conductibité thermique élevée, comme le cuivre ou l'argent, et servant de réservoir d'énergie thermique, un puit de conduction 3 constitué par un diamant naturel du type 2A.

Le dessin illustre le soudage d'une pièce 5 et d'une pièce 6 prenant appui sur un plan fixe 9.

L'enveloppe 2 est montée sur un support 8 par l'intermédiaire de deux bras élastiques 7 et 7a.

La surface 13 à travers laquelle l'énergie thermique est transmise de l'enveloppe 2 au diamant 3 établit un contact intime entre ces deux éléments ( soudure de diffusion Ti/Pt/Au.

La soudure entre les pièces 5 et 6 est réalisée par un apport de chaleur concentrée à travers la surface 14 et par une pression exercée sur la pièce 5 par l'entremise du support 8.

Trois paramètres conditionnent la qualité de la soudure: la température T, la pression p et la durée de l'application t.

Le dispositif de soudage décrit permet d'obtenir, par un réglage approprié de ces trois paramètres, des soudures de très grande qualité, exemptes de polluants et sans atteinte des zones voisines de la soudure.

La température T maximum qui évite la graphitalisation du diamant est de 650° C.

La figure 2 représente différentes formes du puit de conduction ( diamant 3 ).

La figure 2a montre un diamant de forme tronconique qui permet d'obtenir une très forte concentration d'énergie sur une petite surface.

La figure 2b montre un diamant en forme de galet plus simple et plus facile à réaliser mais moins compact que la forme tronconique.

La figure 2c montre un diamant noyé, la conduction est sans concentration.

La figure 2c montre un diamant obtenue par CVD d'une couche polycristalline de diamant. La conductivité de ce puit est inférieure au diamant naturel de type 2A et l'effet de puit de conduction est limité. Un de ses avantages réside dans le fait qu'elle permet de réaliser de grandes surfaces et des formes complexes.

Le dispositif représenté à la figure 3 comprend une tête de soudure équipée de moyens de protection à gaz inerte permettant d'éviter une oxydation des soudures dans le cas d'alliages sensibles à l'oxydation. Le gaz inerte arrive dans un espace 10 ménagé autour l'enveloppe 2 et s'écoule à l'extérieur au niveau du diamant 3.

L'invention n'est évidemment pas limitée aux formes d'exécution décrites.

En particulier le diamant naturel de type 2A pourrait être remplacé, dans l'ordre de qualité, par un diamant synthétique monocristallin, par un diamant CVD polycristallin, par un composite de diamant polycristallin-cobalt, etc. etc.

## Revendications

1. Dispositif de soudage par diffusion d'un alliage métallique entre les pièces à souder, caractérisé par le fait qu'il comprend un puit de conduction (3).

2. Dispositif selon la revendication 1, caractérise par le fait que ledit puit de conduction (3) est constitué par un diamant.

3. Dispositif selon la revendication 2 , caractérisé par le fait que ledit diamant (3) est un diamant naturel du type 2A.

4. Dispositif selon la revendication 2 , caractérisé par le fait que ledit diamant (3) est un diamant synthétique monocristallin.

5. Dispositif selon la revendication 2, caractérisé par le fait que ledit diamant (3) est un diamant CVD polycristallin.

6. Dispositif selon la revendication 2, caractérisé par le fait que ledit diamant (3) est constitué par un composite diamant polycristallin - cobalt.

7. Dispositif selon la revendication 2 , caractérisé par le fait que son élément chauffant (1) est logé dans une enveloppe (2) , en cuivre ou en argent, servant de réservoir d'énergie thermique.

8. Dispositif selon la revendication 2 , caractérisé par le fait que ledit diamant (3) est de forme tronconique délimité par l'interface (13) véhiculant l'énergie thermique de l'enveloppe (2) au diamant (3) et par la surface (14) transmettant l'énergie thermique à l'une (5) des pièces à souder.

9. Dispositif selon la revendication 2 , caractérisé par le fait qu'il comprend un support (8) relié à ladite enveloppe (2) par deux bras élastiques (7,7a) permettant d'exercer, au niveau de la face (14) du diamant une pression réglable.

10. Dispositif selon la revendication2 , caractérisé par le fait que ledit diamant (3) présente l'une des formes illustrées aux figures 2a à 2d.

11. Dispositif selon la revendication 2, caractérisé par le fait qu'un espace annulaire (10) est ménagé entre ladite enveloppe (2) et ledit diamant (3) et que des moyens sont prévus faire circuler dans cet espace (10) un gaz protecteur (12) tel que le l'argon ou de l'azote.
